# FASCICULE DE BREVET EUROPEEN

(11) **EP 1 316 237 B1**
(45) Date de publication et mention de la délivrance du brevet: **16.02.2011**
(21) Numéro de dépôt: 01967444.9
(22) Date de dépôt: 06.09.2001
(51) Int. Cl.: H04W 48/18

(54) **PROCEDE ET DISPOSITIF DE CONNEXION D'UN TERMINAL A PLUSIEURS RESEAUX DE TELECOMMUNICATIONS**
VERFAHREN UND VORRICHTUNG ZUR VERBINDUNG EINES ENDGERÄT MIT MEHREREN NETZEN
METHOD AND DEVICE FOR CONNECTING A TERMINAL TO SEVERAL TELECOMMUNICATION NETWORKS

(30) Priorité: 08.09.2000 FR 0011490
(43) Date de publication de la demande: 04.06.2003
(73) Titulaire: Transatel, 92979 Paris La Défense (FR)
(72) Inventeur: SALOMON, Bertrand, F-75016 Paris (FR); BONIFAY, Jacques, F-92100 Boulogne (FR); DURAND, Romain, F-75008 Paris (FR)
(74) Mandataire: Wagret, Frédéric
(86) Numéro de dépôt international: PCT/FR2001/002776
(87) Numéro de publication internationale: WO 2002/021872

(56) Documents cités:
- EP-A- 0 344 989
- WO-A-99/55107

## Description

La présente invention concerne le domaine des télécommunications mobiles, et plus particulièrement celui des modules destinés à identifier un abonné auprès d'un opérateur.

Chaque terminal de radiocommunication, comme les téléphones mobiles par exemple, doit, pour pouvoir accéder à un réseau de télécommunications tel que le réseau GSM (Global System for Mobile communications), être équipé d'un module permettant d'identifier son utilisateur.

Dans le cas du réseau GSM, ledit module est appelé carte SIM (pour Subscriber Identity Module ou module d'identité du souscripteur) se présentant sous la forme d'une carte à puce apte à être insérée dans le terminal.

La carte SIM, fournie par un opérateur de télécommunications, comporte un numéro international (ou numéro IMSI) ainsi que des données propres à l'opérateur et aptes à être lues par des moyens de lecture du terminal.

Ainsi, à chaque abonnement correspond une carte SIM et donc un numéro IMSI que l'opérateur peut identifier.

Dans la configuration actuelle des réseaux de télécommunications, chaque opérateur n'offre ses services que sur son territoire national.

Si le titulaire d'un abonnement auprès d'un opérateur souhaite se déplacer hors de son territoire national, il n'est plus couvert par le réseau de son opérateur d'origine et se trouve dans l'impossibilité d'utiliser son téléphone mobile.

C'est pourquoi se sont mis en place des accords d'itinérance, ou accords de « roaming », entre des opérateurs nationaux de pays différents afin d'offrir à leurs abonnés respectifs une complémentarité de leurs services et de leurs réseaux.

Ainsi, un abonné se déplaçant à l'étranger peut continuer à utiliser son téléphone en basculant sur le réseau d'un opérateur du pays où il se trouve qui a signé un accord avec son opérateur national.

La demande PCT WO 99/55107 divulgue un procédé qui permet à une station mobile de se connecter à un réseau de base et/ou à un réseau référencé sans que le réseau de base et le réseau référencé aient conclu des accords d'itinérance.

Le mobile a un numéro international d'identification IMSI 1 (international Mobile Subscriber Identity) pour le réseau de base et un numéro International d'identification IMSI 2 pour un réseau partenaire, le réseau partenaire ayant des accords d'itinérance avec des réseaux référencés. Les deux numéros IMSI 1 et IMSI 2 correspondent à un même numéro d'appel MSISDN (Mobile Subscriber Integrated Services Digital Network) et sont stockés sur une même carte SIM (Subscriber Identity Module) ou sur deux cartes SIM différentes.

Cependant, certains services proposés par l'opérateur national (boîte vocale, messages courts écrits, appel. direct vers des services tels que les taxis...) deviennent difficiles voire impossible à utiliser à l'étranger puisque le réseau couvrant les communications ne correspond plus à son propre réseau d'origine.

De plus, les coûts de communications sont très importants, puisque l'utilisateur se trouve à l'étranger, et le cheminement des communications est complexe. Par exemple, l'appel d'une personne en Angleterre par un abonné français se trouvant en Angleterre va transiter par la France avant de revenir en Angleterre.

En outre, avec ces accords d'itinérance, un abonné se trouvant à l'étranger supporte une partie des coûts de communication lorsqu'il est appelé. En effet, la communication va transiter par le réseau téléphonique commuté international pour aboutir à l'abonné qui se voit facturer une partie de l'appel qu'il reçoit.

Enfin, l'abonné se voit contraint d'effectuer des manipulations fastidieuses du fait des différences de numérotation.

Dans ce contexte, la présente invention pallie ces divers inconvénients en proposant un procédé de connexion, à au moins deux réseaux de télécommunications différents, d'un terminal de radiocommunication comportant un module d'identité du souscripteur du type carte à puce comprenant des jeux d'informations de connexion aptes chacun à permettre la connexion du terminal à l'un des réseaux de télécommunications référencés sur le module d'identité du souscripteur, ledit procédé comportant les étapes de :
- Recherche, parmi les réseaux offrant une couverture radio du terminal, d'un réseau référencé sur le module d'identité du souscripteur, le terminal étant attaché à un réseau de base,
- Réinitialisation et attachement du terminal audit réseau référencé si celui-ci est différent du réseau de base.

Avantageusement, la recherche d'un réseau référencé sur le module d'identité du souscripteur, parmi les réseaux offrant une couverture radio du terminal, est réalisée à partir d'une liste de réseaux préférés prévue dans le module d'identité du souscripteur.

Selon une forme de réalisation, le réseau de base est le même à chaque mise en service du terminal.

Selon une variante de l'invention, le réseau de base est celui auquel était attaché le terminal avant sa dernière mise hors service.

Les différents réseaux référencés peuvent couvrir des pays différents ou des régions différentes d'un même pays.

De préférence, lors de l'étape de recherche, parmi les réseaux offrant une couverture radio du terminal, d'un réseau référencé sur le module d'identité du souscripteur, ledit module d'identité de souscripteur recherche des informations de localisation propres à chaque réseau de télécommunications.

Les informations de localisation comprennent, par exemple, le code mobile du pays ainsi que le code mobile du réseau définis selon la norme Global System for Mobile communications.

Afin d'assurer une plus grande sécurité à l'utilisateur, le procédé peut prévoir une étape de saisie et de vérification d'un code d'identification associé au module d'identité du souscripteur, immédiatement après la mise en service du terminal.

Selon une forme particulière de réalisation de l'invention, le terminal reste attaché au réseau de base si aucun réseau parmi les réseaux offrant une couverture radio du terminal n'est référencé sur le module d'identité du souscripteur.

De manière avantageuse, lors de la réinitialisation et de l'attachement du terminal à l'un des réseaux référencés différent du réseau de base, le jeu d'informations de connexion correspondant audit réseau référencé est substitué, à un endroit prédéterminé sur le module d'identité du souscripteur, au jeu d'informations de connexion correspondant au réseau de base.

En outre, le terminal et/ou le module d'identité du souscripteur, après la réinitialisation et l'attachement à l'un des réseau référencé différent du réseau de base, envoie des informations à un réseau tiers permettant de localiser le terminal.

Dans le cas de réseaux fonctionnant selon la norme « Global System for Mobile communications (GSM) », les jeux d'informations de connexion comprennent un numéro international d'abonné du type IMSI ainsi qu'une clé d'authentification du type Ki.

Selon une forme de réalisation particulière, la recherche d'un réseau référencé sur le module d'identité du souscripteur parmi les réseaux offrant une couverture radio du terminal peut être réalisée manuellement par l'utilisateur du terminal.

L'invention concerne également un module d'identité du souscripteur du type carte à puce, destiné à être inséré dans un terminal de radiocommunication et comportant au moins deux jeux d'informations de connexion différents permettant au terminal de se connecter à au moins deux réseaux différents référencés sur le module d'identité du souscripteur, ledit module comprenant des moyens de :
- Recherche, parmi les réseaux offrant une couverture radio du terminal, d'un réseau référencé sur le module d'identité du souscripteur, le terminal étant attaché à un réseau de base,
- Réinitialisation et attachement du terminal audit réseau référencé si celui-ci est différent du réseau de base.

Dans le cas de réseaux fonctionnant selon la norme « Global System for Mobile communications », les jeux d'informations de connexion comprennent un numéro international du type IMSI ainsi qu'une clé d'authentification du souscripteur du type Ki.

Avantageusement, les moyens de recherche d'un réseau référencé et les moyens de réinitialisation et d'attachement du terminal audit réseau référencé, si celui-ci est différent du réseau de base, sont des moyens logiciels.

De préférence, les moyens logiciels permettent d'accéder de manière identique à un même service proposé par différents réseaux, et ce quel que soit le réseau auquel est attaché le terminal dans lequel est inséré le module d'identité du souscripteur.

Selon une forme préférée de réalisation, les moyens logiciels sont du type applications SIM Toolkit.

L'invention sera mieux comprise à la lumière de la description qui suit se rapportant à un exemple de réalisation illustratif mais en aucun cas limitatif, en référence aux dessins annexés dans lequel :
- La figure 1 est une vue schématique d'un terminal de radiocommunication et d'un module d'identité du souscripteur selon l'invention ;
- La figure 2 est un organigramme montrant les différentes étapes d'une forme de réalisation du procédé de l'invention.

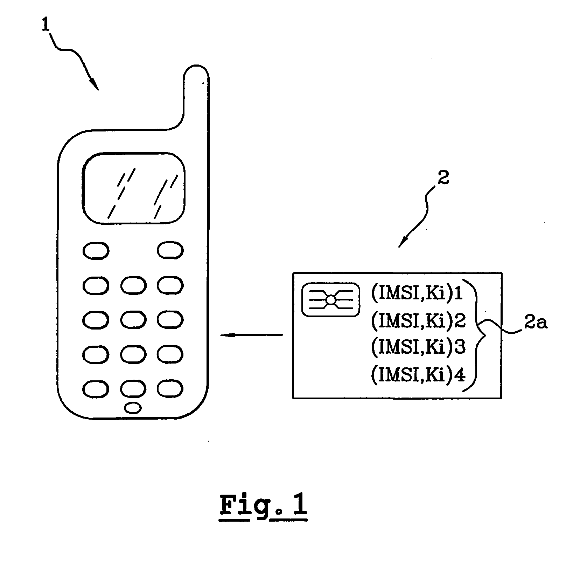

La figure 1 représente un terminal de radiocommunication mobile 1 dans lequel est apte à être inséré un module d'identité de souscripteur 2, du type carte à puce.

Ledit module comporte différents jeux d'informations de connexion 2a aptes chacun à permettre la connexion du terminal 1 au réseau d'un opérateur de télécommunications.

Dans le cas, par exemple, d'un réseau de télécommunications répondant à la norme GSM, le module d'identité du souscripteur 2 est appelé carte SIM, chaque jeu d'informations de connexion 2a comprenant alors :
- un numéro international de souscripteur IMSI ;
- une clé d'authentification du souscripteur Ki ;
- éventuellement un algorithme de cryptographie.

Dans le cadre de l'invention, chaque carte SIM peut comporter plusieurs jeux d'informations de connexion 2a, les seules contraintes étant l'espace mémoire nécessaire et la taille de la carte SIM 2.

La carte SIM 2 de la figure 1 comporte ainsi quatre jeux d'informations de connexion 2a différentes, sous la forme de quatre couples (IMSI, Ki) aptes chacun à permettre la connexion du terminal 1 au réseau d'un opérateur différent. Lesdits réseaux peuvent couvrir chacun une partie d'un unique pays, mais également et avantageusement, couvrir quatre pays différents.

Ainsi, le premier couple (IMSI, Ki)₁ peut couvrir, par exemple, le territoire national français, le couple (IMSI, Ki)₂ l'Angleterre, etc.

Comme nous le verrons ultérieurement, la carte SIM 2 est apte à supporter les applications du type SIM Toolkit telles que définies par la norme GSM 11.14, notamment les applications concernant le contrôle d'appel (« call control »), le processus de réinitialisation du terminal 1 à partir de la carte SIM 2 elle-même, etc.

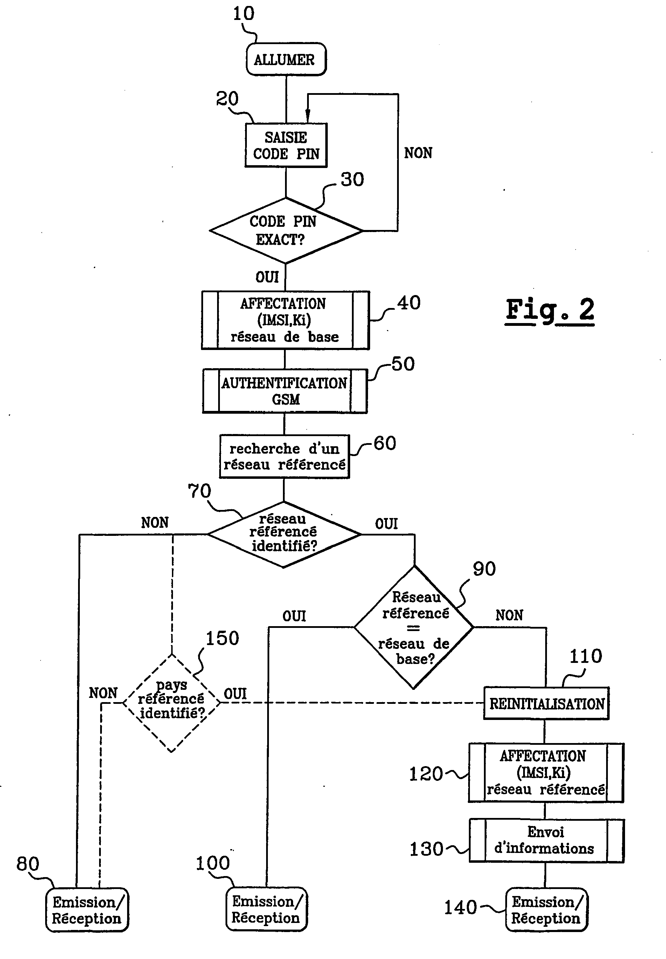

La figure 2 est un organigramme représentant les différentes étapes d'une forme de réalisation du procédé de connexion aux réseaux de différents opérateurs selon l'invention.

L'étape 10 initiale correspond à la mise en service par l'utilisateur du terminal 1 après avoir inséré la carte SIM 2 comportant les différents couples (IMSI, Ki).

Le procédé selon l'invention peut avantageusement prévoir, de manière connue, une étape de saisie 20 d'un code secret communément appelé code PIN dans la norme GSM. Cette étape de saisie 20 du code PIN permet notamment d'éviter toute utilisation frauduleuse de la carte SIM 2.

L'étape suivante 30 est une étape de décision au cours de laquelle l'exactitude du code PIN saisi lors de l'étape 20 est vérifiée.

Dans le cas où ce code PIN est inexact, le procédé, de manière connue, reprend à l'étape 20 et le terminal 1 propose de nouveau à l'utilisateur de saisir le code PIN.

Si le code PIN saisi à l'étape 20 est exact, le procédé passe à l'étape 40 au cours de laquelle le terminal 1, grâce à des moyens de lecture connus en eux-mêmes, lit l'un des jeux d'informations de connexion 2a sur la carte SIM 2 et vient l'affecter, sur la carte SIM 2, à un emplacement précis et standardisé par la norme GSM.

Pour plus de commodités, le couple (IMSI, Ki) affecté dès la mise en service du terminal 1 lors de l'étape 40 est appelé couple (IMSI, Ki) de base. Ce couple (IMSI, Ki) de base correspond donc à un réseau « de base », référencé sur la carte SIM 2.

Selon une première forme de réalisation, le réseau de base peut être celui auquel était attaché le terminal 1 lors de sa dernière utilisation. Dès la mise en service du terminal 1, le couple (IMSI, Ki) correspondant au dernier réseau auquel était attaché le terminal 1 est affecté à l'emplacement prévu par la norme GSM sur la carte SIM 2.

Selon une variante de réalisation, le couple (IMSI, Ki) de base peut être identique à chaque mise en service du terminal 1. Le couple (IMSI, Ki) de base peut correspondre, par exemple, à celui d'un réseau couvrant le territoire où la carte SIM 2 a été mise en service pour la première fois.

Lors de l'étape suivante 50 a lieu la procédure dite « d'authentification GSM », au cours de laquelle le terminal 1 est attaché au réseau de l'opérateur de télécommunications correspondant au couple (IMSI, Ki) de base. Cette procédure classique de la norme GSM, qui sert à authentifier l'utilisateur de la carte SIM 2, fait notamment intervenir le numéro IMSI, la clé d'authentification Ki ainsi que l'algorithme de cryptographie.

Le procédé prévoit ensuite une étape 60 au cours de laquelle la carte SIM 2, par l'intermédiaire des applications du type SIM Toolkit, procède à une recherche et une identification des réseaux offrant une couverture radio au terminal 1.

La carte SIM 2 pilote ainsi le terminal 1 afin de mener cette recherche des différents réseaux disponibles.

L'identification des réseaux offrant une couverture radio se fait par l'intermédiaire d'informations de localisation émises par chaque réseau de télécommunications. Lesdites informations de localisation, ou LOCI, comprennent notamment un code mobile de pays, différent pour chaque pays, ainsi qu'un code mobile de réseau, propre à chaque opérateur de télécommunication.

Ces deux codes composent en partie chaque numéro IMSI de la norme GSM (les six premiers digits), et donc en particulier ceux référencés sur la carte SIM 2.

La procédure de recherche, parmi les réseaux offrant une couverture radio du terminal 1, d'un réseau référencé sur la carte SIM 2 peut être menée de différentes façons.

Selon une forme avantageuse de réalisation, la carte SIM 2 dispose d'une liste de réseaux préférés parmi lesquels elle recherche en priorité.

Conduit par la carte SIM 2, le terminal 1 « lit » la liste les réseaux préférés puis balaie l'ensemble des fréquences à la recherche de l'un de ces réseaux préférés.

Le terminal 1 peut, par exemple, rechercher le premier réseau de la liste de la carte SIM 2. Grâce à l'IMSI du couple référencé (IMSI, Ki)₁, le terminal 1 dispose du code réseau du premier réseau de sa liste.

Si aucun réseau offrant une couverture radio ne correspond au code du premier IMSI de la liste, le terminal 1 passe au second, et ainsi de suite pour tous les réseaux de la liste de réseaux préférés jusqu'à ce qu'il en identifie un parmi ceux offrant une couverture radio.

Selon une autre forme de réalisation, la carte SIM 2 peut ne pas comporter de liste de réseaux préférés et le terminal recherche, parmi tous les réseaux offrant une couverture radio, si les informations de localisation de l'un d'entre eux (notamment le code réseau) correspondent à l'un des jeux d'informations de connexion présents sur la carte SIM 2.

En effet, comme on l'a vu, une partie du numéro international IMSI correspond aux codes de pays et de réseau émis par chaque réseaux. La carte SIM 2 compare donc les codes des réseaux offrant une couverture radio aux numéros IMSI des couples (IMSI, Ki)₁, (IMSI, Ki)₂, etc, référencés dans sa mémoire.

Dans le cas où aucun code de réseau ne correspond aux numéros IMSI des couples (IMSI, Ki) référencés sur la carte SIM 2, le terminal 1 reste attaché au réseau de base et fonctionne alors selon la procédure connue dite de « roaming » (ou itinérance, étape 80) permettant à un terminal d'être accueilli sur un réseau offrant une couverture radio tout en étant attaché à un réseau de base différent (si toutefois des accords ont été conclu entre les opérateurs des réseaux).

Dans un tel cas, les données (voix, textes...) transitent par le réseau de l'opérateur d'accueil et le réseau téléphonique commuté international (procédés de l'art antérieur).

Si, par contre, l'un des réseaux référencés sur la carte SIM 2 est identifié, alors le terminal 1, lors de l'étape de décision 90, détermine si ledit réseau référencé et identifié correspond au réseau de base auquel il est déjà attaché.

Si tel est le cas, le code réseau du réseau référencé identifié correspond à celui présent sur le numéro IMSI du couple (IMSI, Ki) de base.

Dans ce cas, le procédé selon l'invention aboutit à l'étape 100. Le terminal 1 peut être utilisé pour émettre ou recevoir des données (vocales et autres) en restant attaché au réseau de télécommunications de base. Aucune modification n'est opérée au niveau de l'affectation du couple (IMSI, Ki) sur la carte SIM 2.

En revanche, si le réseau référencé et identifié lors des étapes 60 et 70 ne correspond pas au réseau de base, alors le procédé passe à l'étape 110.

Lors de cette étape 110, la carte SIM 2, par l'intermédiaire des applications SIM Toolkit, provoque la réinitialisation du terminal 1 afin de changer le réseau auquel ledit terminal 1 sera attaché.

A cette fin, lors de l'étape suivante 120, le couple (IMSI, Ki) correspondant au réseau référencé identifié lors des étapes précédentes est affecté à l'endroit prévu et standardisé par la norme GSM sur la carte SIM 2.

Le couple (IMSI, Ki) du réseau référencé est ainsi substitué au couple (IMSI, Ki) de base.

Le terminal 1, avec la carte SIM 2 ainsi configurée, est alors attaché à un réseau couvrant la zone où il se trouve.

Avantageusement, le procédé selon l'invention prévoit une étape supplémentaire 130 au cours de laquelle le terminal 1 et/ou la carte SIM 2 envoie des informations au réseau d'un opérateur tiers afin de localiser systématiquement le terminal 1.

Le réseau tiers peut être, par exemple, celui de l'opérateur ayant émis la carte SIM 2. Ainsi, l'opérateur tiers peut assurer à l'utilisateur du terminal 1 une continuité de service en routant les appels qui lui sont destinés ou en assurant le fonctionnement de son répondeur.

Dans la configuration issue de l'étape 120, le terminal 1 utilise, pour émettre et recevoir des données (étape 140), un réseau local du lieu (pays ou région) où il se trouve sans procédure d'itinérance. L'utilisateur dudit terminal 1 est vu, par l'opérateur du réseau auquel il est attaché, comme étant un abonné local et la tarification qui lui est appliquée est une tarification locale.

En outre, l'utilisateur dudit terminal 1 peut bénéficier pleinement de tous les services mis en place par l'opérateur du réseau local auquel le terminal 1 est attaché tel que, par exemple, les messages courts de type SMS, les boîtes vocales, ou tous autres services développés par l'opérateur exploitant le réseau.

Il est à noter qu'une étape supplémentaire 150 (apparaissant en traits interrompus sur la figure 2) peut être introduite dans le procédé selon l'invention.

Au cours de cette étape 150 intercalée entre les étapes 70 et 80, le terminal 1 recherche, dans le cas où il n'aurait identifié aucun des réseaux référencés sur la carte SIM 2, s'il se trouve dans l'un des pays (ou région) référencés sur ladite carte SIM 2.

Le cas peut se produire, en effet, si l'un des réseaux référencés est momentanément indisponible (parking...) alors que le terminal 1 se trouve dans une zone sensée être couverte par ledit réseau.

On a vu que chaque numéro IMSI des couples (IMSI, Ki) référencés sur la carte SIM 2 comporte le code mobile du réseau et le code mobile du pays correspondant à l'abonnement.

Ainsi, même si lors des étapes 60 et 70 aucun code réseau n'a été identifié, le terminal 1 peut tout de même identifier un pays référencé, grâce à un réseau qui ne serait pas référencé mais disposant du même code pays par exemple.

Si tel est le cas, le procédé selon l'invention prévoit que le terminal 1 soit réinitialisé (étape 110) et le couple (IMSI, Ki) du réseau référencé correspondant au pays identifié est affecté sur la carte SIM 2 en lieu et place du couple (IMSI, Ki) de base.

Cette procédure de changement de réseau (étapes 110 à 140) est ainsi identique à celle se déroulant dans le cas où un réseau référencé différent du réseau de base est identifié (étapes 60, 70 et 90) par le terminal 1.

Dans le cas où aucun pays référencé n'est identifié lors de l'étape 150, le procédé aboutit à l'étape 80 vue précédemment où le terminal 1 peut émettre ou recevoir des données par la procédure d'itinérance.

Cependant, l'utilisateur du terminal 1 peut initier le procédé selon l'invention de manière manuelle, et ce à tout moment.

En effet, l'utilisateur peut, si son terminal 1 est déjà allumé, rechercher si l'un des réseaux référencés sur la carte SIM 2 offre une couverture radio. Ce cas peut se produire par exemple si l'utilisateur se déplace en changeant de pays (ou de région) avec son terminal de radiocommunication 1 allumé.

Alors, une fois arrivé, l'utilisateur peut, grâce à un menu ad hoc prévu sur la carte SIM 2 et affiché sur l'écran du terminal 1, faire exécuter une recherche des réseaux référencés et le procédé selon l'invention est initié à partir de l'étape 60.

Ainsi, grâce au procédé selon l'invention, un utilisateur se déplaçant souvent peut conserver son terminal 1 ainsi que la carte SIM 2 insérée à l'intérieur sans avoir à supporter un éventuel surcoût lié à l'utilisation de son terminal 1 à l'étranger.

La carte SIM 2 selon l'invention lui permet, en effet, de disposer avec un module d'identité du souscripteur unique de plusieurs abonnements, chaque abonnement étant utilisé dans le pays (éventuellement la région) correspondant.

La carte SIM 2 permet également d'assurer une continuité dans les services offerts par les opérateurs des différents réseaux. Par exemple, si à travers un menu du terminal 1 des services identiques (consultation de messages, commande de taxi) sont proposés sur tous les réseaux, la carte SIM 2 permet d'accéder à ces services de manière locale, quel que soit le réseau auquel est attaché le terminal 1.

En effet, la carte SIM 2 se charge d'adapter le numéro devant être composé pour accéder à ces services selon le réseau auquel le terminal 1 est attaché (procédure dite de contrôle d'appel ou « call control »).

En outre, grâce aux applications de type SIM Toolkit présentes sur la carte SIM 2, le terminal 1 n'a pas besoin d'être modifié pour pouvoir mettre en oeuvre la présente invention. Tout terminal 1 supportant les applications de type SIM Toolkit peut mettre en oeuvre le procédé selon l'invention dès lors qu'est insérée dans ledit terminal 1 une carte SIM 2 selon l'invention.

## Revendications

1. Procédé de connexion, à au moins deux réseaux de télécommunications différents, d'un terminal de radiocommunication (1) comportant un module d'identité du souscripteur (2) du type carte à puce comprenant des jeux d'informations de connexion (2a) aptes chacun à permettre la connexion du terminal (1) à l'un des réseaux de télécommunications référencés sur le module d'identité du souscripteur (2), ces jeux d'informations de connexion (2a) comprenant un numéro international d'abonné du type IMSI ainsi qu'une clé d'authentification du type Ki, définis selon la norme Global System for Mobile communications, ledit procédé comportant les étapes de :
- Recherche (60), par exemple déclenchée manuellement par l'utilisateur du terminal (1), parmi les réseaux offrant une couverture radio du terminal (1), d'un réseau référencé sur le module d'identité du souscripteur (2), à partir d'une liste de réseaux préférés couvrant des pays différents prévue dans le module d'identité du souscripteur (2), le terminal (1) étant attaché à un réseau de base,
- Réinitialisation (110) et attachement (120) du terminal (1) audit réseau référencé si celui-ci est différent du réseau de base.
- Saisie (20) et de vérification (30) d'un code d'identification associé au module d'identité du souscripteur (2) immédiatement après la mise en service du terminal (1),
**caractérisé en ce que** le terminal (1) et/ou le module d'identité du souscripteur (2), après la réinitialisation (110) et l'attachement (120) à l'un des réseaux référencés différent du réseau de base, envoie des informations (130) à un réseau tiers permettant de localiser le terminal (1).

2. Procédé selon la revendication 1, **caractérisé en ce que** le réseau de base est le même à chaque mise en service du terminal (1).

3. Procédé selon l'une des revendications précédentes, **caractérisé en ce que** le réseau de base est celui auquel était attaché le terminal (1) avant sa dernière mise hors service.

4. Procédé selon l'une des revendications précédentes, **caractérisé en ce que**, lors de l'étape de recherche (60) parmi les réseaux offrant une couverture radio du terminal (1), d'un réseau référencé sur le module d'identité du souscripteur (2), ledit module d'identité de souscripteur (2) recherche des informations de localisation propres à chaque réseau de télécommunications.

5. Procédé selon la revendication précédente, **caractérisé en ce que** les informations de localisation comprennent le code mobile du pays ainsi que le code mobile du réseau définis selon la norme Global System for Mobile communications.

6. Procédé selon l'une des revendications précédentes, **caractérisé en ce que** le terminal (1) reste attaché au réseau de base si aucun réseau parmi les réseaux offrant une couverture radio du terminal (1) n'est référencé sur le module d'identité du souscripteur (2).

## Claims

1. A method for connecting, to at least two different telecommunications networks, a radio communication terminal (1) comprising a subscriber identification module (2) of the smart card type including connection information sets (2a), each capable of allowing the terminal (1) to connect to one of the telecommunications networks referenced on the subscriber identification module (2), the connection information sets (2a) comprising an international subscriber number of the IMSI type and an authentication key of the Ki type, defined in accordance with the Global System for Mobile communications standard, where the method comprises the steps of:
- Searching (60), for example triggered manually by the user of the terminal (1), a network referenced on the subscriber identification module (2) out of the networks offering radio cover to the terminal (1), from a list of preferred networks covering different countries provided in the subscriber identification module (2), where the terminal (1) is attached to a base network,
- Resetting (110) and attaching (120) the terminal (1) to the said reference network if it is different from the base network.
- Entering (20) and checking (30) an authentication code associated with the subscriber identification module (2) immediately after the terminal is put into service (1),
**characterised in that** the terminal (1) and/or the subscriber identification module (2), after resetting (110) and attachment (120) to one of the referenced networks different from the base network, sends information (130) to a third-party network that makes it possible to locate the terminal (1).

2. A method according to claim 1, **characterised in that** the base network is the same every time the terminal is put into service (1).

3. A method according to any of the foregoing claims, **characterised in that** the base network is that to which the terminal (1) was attached before it was last put into service.

4. A method according to any of the foregoing claims, **characterised in that** during the step of searching (60) a network referenced on the subscriber identification module (2) out of the networks offering radio cover to the terminal (1), the said subscriber identification module (2) searches location information specific to each telecommunications network.

5. A method according to the previous claim, **characterised in that** the location information includes the mobile code of the country and the mobile code of the network defined according to the Global System for Mobile communications standard.

6. A method according to any of the foregoing claims, **characterised in that** the terminal (1) remains attached to the base network if none of the networks offering radio cover to the terminal (1) is referenced in the subscriber identification module (2).

## Patentansprüche

1. Anschlussverfahren an mindestens zwei verschiedene Telekommunikationsnetzwerke eines Funkterminals (1), das ein Teilnehmer-Identifikationsmodul (2) in der Art einer Chipkarte mit Informationselementen für den Anschluss (2a) umfasst, die jeweils den Anschluss des Terminals (1) an eins der im Teilnehmer-Identifikationsmodul (2) referenzierten Telekommunikationsnetzwerke ermöglichen können, wobei diese Informationselemente für den Anschluss (2a) eine internationale Teilnehmernummer vom Typ IMSI sowie einen Teilnehmerautorisierungsschlüssel vom Typ Ki umfassen, die gemäß der Norm Global System for Mobile communications definiert sind, wobei das Verfahren folgende Schritte umfasst :
- Suche (60), die zum Beispiel manuell von einem Benutzer des Terminals (1) gestartet wurde, unter den für den Terminal (1) einen Funkkontakt bietenden Netzwerken eines im Teilnehmer-Identifikationsmodul (2) referenzierten Netzwerkes, ausgehend von einer Liste von bevorzugten, verschiedene Länder abdeckenden Netzwerken, die im Teilnehmer-Identifikationsmodul (2) vorgesehen sind, wobei das Terminal (1) einem Basisnetzwerk zugeordnet ist,
- Reinitialisieren (110) und Zuordnen (120) des Terminals (1) zum referenzierten Netzwerk, wenn sich dieses vom Basisnetzwerk unterscheidet.
- Erfassen (20) und Überprüfen (30) eines dem Teilnehmer-Identifikationsmodul (2) zugeordneten Identifizierungscodes sofort nach dem Einschalten des Terminals (1),
**dadurch gekennzeichnet, dass** das Terminal (1) und/oder das Teilnehmer-Identifikationsmodul (2) nach dem Reinitialisieren (110) und Zuordnen (120) zu einem der sich vom Basisnetzwerk unterscheidenden Netzwerk, an ein drittes Netzwerk Informationen (130) sendet, damit das Terminal (1) lokalisiert werden kann.

2. Verfahren nach Anspruch 1, **dadurch gekennzeichnet, dass** das Basisnetzwerk bei jedem Einschalten des Terminals (1) das gleiche ist.

3. Verfahren nach einem der vorausgehenden Ansprüche, **dadurch gekennzeichnet, dass** das Basisnetzwerk das ist, dem das Terminal (1) vor dem letzten Ausschalten zugeordnet war.

4. Verfahren nach einem der vorausgehenden Ansprüche, **dadurch gekennzeichnet, dass** während dem Suchen (60) unter den für den Terminal (1) einen Funkkontakt bietenden Netzwerken eines im Teilnehmer-Identifikationsmodul (2) referenzierten Netzwerkes das Teilnehmer-Identifikationsmodul (2) nach Lokalisierungsinformationen sucht, die jedem Telekommunikationsnetzwerk eigen sind.

5. Verfahren nach vorausgehendem Anspruch, **dadurch gekennzeichnet, dass** die Lokalisierungsinformationen den Mobilfunkcode des Landes sowie den Mobilfunkcode des Netzwerkes umfassen, die gemäß der Norm Global System for Mobile communications definiert sind.

6. Verfahren nach einem der vorausgehenden Ansprüche, **dadurch gekennzeichnet, dass** das Terminal (1) dem Basisnetzwerk zugeordnet bleibt, wenn kein anderes Netzwerk unter den dem Terminal (1) einen Funkkontakt bietenden Netzwerken im Teilnehmer-Identifikationsmodul (2) referenziert ist.
